# EUROPÄISCHE PATENTSCHRIFT

(11) **EP 0 731 368 B1**
(45) Veröffentlichungstag und Bekanntmachung des Hinweises auf die Patenterteilung: **26.09.2001**
(21) Anmeldenummer: 95118915.8
(22) Anmeldetag: 01.12.1995
(51) Int. Cl.: G02B 6/16, C03C 13/04

(54) **Zylinderförmiger Lichtwellenleiter**
Cylindrical light-guide
Guide d'ondes lumineuses cylindrique

(30) Priorität: 21.02.1995 DE 19505929
(43) Veröffentlichungstag der Anmeldung: 11.09.1996
(73) Patentinhaber: Heraeus Quarzglas GmbH & Co. KG, 63450 Hanau (DE)
(72) Erfinder: Fabian, Heinz, D-63579 Freigericht (DE)

(56) Entgegenhaltungen:
- EP-A- 0 312 933
- EP-A- 0 408 873
- EP-A- 0 432 421
- EP-A- 0 434 237
- EP-A- 0 510 653
- US-A- 4 868 141
- US-A- 4 913 518
- US-A- 4 938 562

## Beschreibung

Die Erfindung betrifft ein optisches Bauteil für die Übertragung von Licht, mit einem zylinderförmigen Kern aus Quarzglas und mit einem den Kern axial umhüllenden Mantel aus Quarzglas und einem die Brechzahl des Quarzglases absenkenden Dotierstoff in Form von Fluor und/oder Bor.

Bei einem derartigen optischen Bauteil kann es sich um einen Lichtwellenleiter oder um eine Vorform zur Herstellung eines Lichtwellenleiters handeln. Es ist bekannt, daß Lichtwellenleiter aus Quarzglas mit undotiertem Kern niedrige Dämpfungswerte aufweisen können. In der Veröffentlichung von Gotaro Tanaka et. al. in "Fiber and Integrated Optics", Vol. 7, Seiten 47-56 wird beispielsweise eine sogenannte Singlemode-Faser mit einem Kern aus reinem, undotiertem Quarzglas und mit einem Mantel aus fluordotiertem Quarzglas beschrieben. An der Faser wurden bei Lichtwellenlängen um 1,5 um Dämpfungswerte von weniger als 0,16 dB/km gemessen. Das theoretische Dämpfungsminimum bei derartigen Lichtwellenleitern liegt noch etwas unter diesem Meßwert. Trotz der theoretisch niedrigen Dämpfungswerte haben sich kommerziell aber nicht Singlemode-Fasern mit reinem Quarzglaskern sondern solche mit Germanium-dotiertem Kern durchgesetzt. Eine Ursache dafür liegt in den Schwierigkeiten beim Ziehen von Fasern aus Vorformen mit reinem Quarzglaskern und dotiertem Mantelglas. Beim Faserziehen werden üblicherweise Temperaturen um 2000 °C eingestellt. Bei diesen Temperaturen ist die Viskosität des fluordotierten Mantelglases geringer als diejenige des Kernglases aus reinem Quarzglas. Die Ziehparameter, wie Ziehgeschwindigkeit und Ziehtemperatur, müssen daher genau aufeinander abgestimmt und eingehalten werden. Das ziehen derartiger Fasern ist daher relativ aufwendig. Zudem werden die Ziehkräfte in erster Linie vom "härteren" Kernglas aufgenommen, das dadurch unter Zugspannung gerät. Es hat sich gezeigt, daß Zugspannungen eine Erhöhung der Streuung und damit der Lichtdämpfung bewirken. EP-A- 0 312 933 offenbart eine Fluor-Borosilikat Glasfaser bei der das Problem der Viskositätsanpassung durch Begrenzung der Al₂O₃-Konzentration kontrolliert wird.

Der Erfindung liegt die Aufgabe zugrunde, ein optisches Bauteil anzugeben, mit dem sehr niedrige Dämpfungswerte erreichbar sind.

Diese Aufgabe wird ausgehend von dem eingangs genannten optischen Bauteil erfindungsgemäß dadurch gelöst, daß das Quarzglas des Mantels zusätzlich ein seine Viskosität im Bereich der Faser-Ziehtemperatur erhöhendes Versteifungsmittel enthält, das Stickstoff enthält, und/oder daß das Quarzglas des Mantels ein die Viskosität von Quarzglas im Bereich der Faser-Ziehtemperatur verringerndes, Chlor enthaltendes Relaxationsmittel in geringerer Konzentration enthält als das Quarzglas des Kerns.

Bei dem optischen Bauteil kann es sich, wie eingangs erläutert, um eine Vorform oder um einen aus der Vorfom gezogenen Lichtwellenleiter handeln. Das Mantelglas ist mit einem seine Brechzahl verringernden Dotierstoff in Form von Fluor und/oder Bor dotiert. Der Dotierstoff bewirkt üblicherweise eine Verringerung der Viskosität des Mantelglases, insbesondere bei den Temperaturen, die für das Ziehen des Lichtwellenleiters aus der Vorform erforderlich sind.

In einer ersten Variante der Erfindung ist das Mantelglas außer mit dem Dotierstoff weiterhin mit einem seine Viskosität erhöhenden Versteifungsmittel dotiert, das Stickstoff enthält. Je höher die Konzentration des Versteifungsmittels im Mantelglas eingestellt wird, umso höher ist dessen Viskosität beim Ziehen des Lichtwellenleiters. Durch geeignete Wahl der Konzentration des Versteifungsmittels ist es möglich, die Viskosität des Mantelglases bei diesen Temperaturen so einzustellen, daß durch das Ziehen keine oder nur geringe Zugspannungen in das Kernglas induziert werden. Dadurch kann der Kern der Vorform bzw. des Lichtwellenleiters reines Quarzglas enthalten.

In einer weiteren Variante der Erfindung ist sowohl das Mantelglas als auch das Kernglas mit einem Chlor enthaltenden Relaxationsmittel dotiert. Das chlorhaltige Relaxationsmittel hat die Wirkung, daß es die Viskosität von Quarzglas bei den üblichen Ziehtemperaturen verringert. Gleichzeitig kann es eine die Brechzahl von Quarzglas erhöhende Wirkung haben. Da das Relaxationsmittel im Kernglas enthalten ist, darf es keine oder nur eine vernachlässigbare Wirkung auf die Streuung und damit auf die Lichtdämpfung des Quarzglases haben. Im Hinblick darauf ist seine Konzentration im Quarzglas des Kernes möglichst gering zu halten. Andererseits ist der auf dem Konzentrationsunterschied des Relaxationsmittels zwischen Mantelglas und Kernglas beruhende Viskositätsunterschied beim Ziehen des Lichtwellenleiters umso höher, je größer der Konzentrationsunterschied ist. Die Konzentration des chlorhaltigen Relaxationsmittels im Mantelglas kann sehr gering oder auch gleich Null sein. Die Viskosität kann auch noch von anderen Dotierstoffen, beispielsweise im Mantelglas, beeinflußt sein. Entscheidend ist wiederum, daß durch geeignete Wahl des Konzentrationsunterschiedes des chlorhaltigen Relaxationsmittels die Viskositäten von Kern- und Mantelglas bei den Ziehtemperaturen so einzustellen sind, daß durch das Ziehen keine oder nur geringe Zugspannungen in das Kernglas induziert werden. Dadurch kann der Kern der Vorform bzw. des Lichtwellenleiters, abgesehen von dem chlorhaltigen Relaxationsmittel, reines Quarzglas enthalten.

In einer dritten Variante der Erfindung ist als erste Maßnahme das Mantelglas außer mit dem Dotierstoff weiterhin mit einem seine Viskosität erhöhenden Versteifungsmittel, das Stickstoff enthält, und als zweite Maßnahme das Mantelglas und auch das Kernglas mit einem chlorhaltigen Relaxationsmittel dotiert. Die beiden Maßnahmen ergänzen sich hinsichtlich der Angleichung der Viskositäten von Kern- und Mantelglas und tragen jeweils auch unabhängig voneinander zur Erzeugung von Druckspannungen im Kernglas bei.

Es ist nicht erforderlich, daß das Kernglas und das Mantelglas eine gemeinsame Grenzfläche haben; entscheidend ist, daß das Kernglas beim Faserziehen unter Druckspannung gerät. Dies kann auch dann gewährleistet sein, wenn zwischen dem Mantelglas und dem Kernglas eine weitere Glasschicht angeordnet ist.

Zur Brechzahlabsenkung ist das Mantelglas mit Fluor und/oder Bor dotiert. Das Fluor liegt dabei üblicherweise in anionischer Form, das Bor als Boroxid vor. Sowohl eine Fluordotierung als auch eine Bordotierung führen zu einer Verringerung der Viskosität des dotierten Quarzglases gegenüber reinem Quarzglas im Temperaturbereich von beispielsweise 1000° C bis 2500° C. Es hat sich gezeigt, daß die durch die genannten Dotierstoffe bewirkte Viskositätserniedrigung des Mantelglases durch Zugabe eines Versteifungsmittels reduziert oder kompensiert werden kann.
Als Versteifungsmittel wird Stickstoff eingesetzt. Stickstoff liegt dabei im Mantelglas in seiner anionischen Form vor. Das genannte Versteifungsmittel beeinflußt die optischen Eigenschaften des Mantelglases nur wenig. Stickstoff verändert den Brechungsindex gegenüber reinem Quarzglas nur geringfügig und ist mit Bor und mit Fluor besonders gut verträglich.

Als Relaxationsmittel wird eine chlorhaltige Substanz eingesetzt. Das Chlor liegt im Quarzglas als Anion vor. Es führt zu einer Verringerung der Viskosität des Quarzglases im Temperaturbereich von beispielsweise 1000° C bis 2500° C. Die Chlordotierung wirkt sich auf die optischen Eigenschaften von Quarzglas nur wenig aus. Chlor wird bei der Herstellung von Vorformen für Lichtwellenleiter als Trocknungsmittel verwendet und liegt daher, wenn auch in geringen Konzentrationen, in den Vorformen und in daraus hergestellten Lichtwellenleitem üblicherweise vor. Bewährt haben sich Chlorkonzentrationen im Kernglas bis zu maximal 3000 ppm. Vorteilhafterweise beträgt die Chlorkonzentration im Mantelglas weniger als 50 % der Chlorkonzentration des Kernglases. Die durch die Dotierung des Mantels bewirkte Viskositätsabsenkung gegenüber Quarzglas kann durch den Unterschied der Chlorkonzentrationen in Kern- und Mantelglas verringert oder sogar ausgeglichen werden. Dadurch ist es möglich, das Kemglas von Zugspannungen im wesentlichen frei zu halten oder sogar Druckspannungen darin zu induzieren.

Es wird ein optisches Bauteil bevorzugt, bei dem das Mantelglas eine innere und eine äußere Schicht aufweist, wobei die innere Schicht mit einem die Brechzahl absenkenden Dotierstoff dotiert ist und die äußere Schicht ein die Viskosität erhöhendes Versteifungsmittel enthält. Wird ein derartiges Bauteil als Vorform für das Ziehen von Lichtwellenleitern eingesetzt, so kann durch die Erhöhung der Viskosität der äußeren Schicht gewährleistet werden, daß die beim Faserziehen auftretenden Zugkräfte ganz oder teilweise vcn dieser Schicht aufgenommen werden. Dadurch ist es möglich, den Kern im wesentlichen frei von Zugkräften beim Faserzeihen zu halten. Bei den aus einer derartigen Vorform gezogenen Lichtwellenleitem ist der Kern daher im wesentlichen frei von Zugspannungen, die auf Zugkräfte beim Faserziehen zurückzuführen wären. Die innere Schicht kann dabei eine relativ geringe Viskosität aufweisen. Es ist nicht erforderlich, daß die innere Schicht das Versteifungsmittel enthält. So kann beispielsweise der Kern des Bauteils aus reinem Quarzglas bestehen, die daran angrenzende innere Schicht des Mantels darüber hinaus ein brechzahlabsenkendes Dotiermittel, wie Fluor und/oder Bor, enthalten, und die daran angrenzende äußere Schicht des Mantels neben Qurazglas ein Versteifungsmittel, wie Stickstoff enthalten.

Als besonders vorteilhaft hat sich auch ein optisches Bauteil erwiesen, bei dem die Zylindermantelfläche von einem das Mantelglas axial umhüllenden Hüllglas gebildet ist, das im Temperaturbereich von 1000 °C bis 2500 °C einen kleineren thermischen Ausdehnungskoeffizienten aufweist als das Mantelglas. Es ist bekannt, daß Druckspannungen in den oberflächennahen Schichten festigkeitsfördernd wirken. Zur Erzeugung von Druckspannungen in der Oberfläche des Bauteils kann das Hüllglas aus titandotiertem Quarzglas bestehen.

Ausführungsbeispiele der Erfindung sind in der Zeichnung dargestellt und werden nachfolgend näher erläutert. In der Zeichnung zeigen im einzelnen in schematischer Darstellung
- **Figur 1**: eine Singlemode-Faser in einem radialen Querschnitt und
- **Figur 2**: eine Vorform für eine Singlemode-Faser in einem radialen Querschnitt

Das folgende Beispiel, das nicht unter den Schutzumfaug fällt, dient zur Erläuterung der Erfindung.

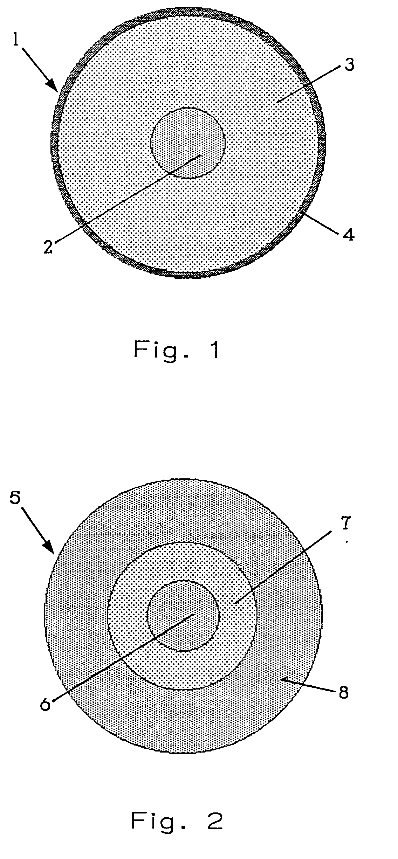

In der **Figur 1** ist die Bezugsziffer 1 ist der Faser insgesamt zugeordnet. Die Faser 1 besteht aus einem Kern 2, aus einem den Kern axial umhüllenden und mit diesem eine gemeinsame Grenzfläche aufweisenden Mantel 3 und aus einem Hüllglas 4, das die Oberfläche des Lichtwellenleiters 1 bildet.

Der Durchmesser des Kerns 2 beträgt ca. 8 µm, der Außendurchmesser des Mantels 3 ca. 125 µm und die Hüllschicht 4 hat eine Dicke von ca. 2 µm.

Der Kern 2 besteht aus reinem Quarzglas. Unter einem reinen Quarzglas wird dabei ein solches Glas verstanden, bei dem die üblichen Verunreinigungen im ppb-Bereich liegen und das einen OH-Gehalt von weniger als 0,1 ppm aufweist. Als Mantelglas ist fluordotiertes Quarzglas eingesetzt. Die Fluordotierung bewirkt eine Brechzahlabsenkung relativ zum Kemglas von 5×10⁻³; das entspricht einer Fluorkonzentration von etwa 1500 ppm. Außerdem enthält das Mantelglas Aluminiumoxid in einer Konzentration von 10 ppm. Die Hüllschicht 4 besteht aus Quarzglas, das mit ca. 5 ppm Titan dotiert ist.

Da für den Kern 2 reines Quarzglas verwendet ist, sind mit der Singlemode-Faser 1 optimal niedrige Dämpfungswerte erreichbar. Die zur Erzielung der Lichtwellenleitereigenschaft erforderliche Brechzahlabsenkung gegenüber dem Kemglas wird durch die Fluordotierung des Mantels 3 erreicht. Durch die Aluminiumdotierung des Mantels 3 wird diese Brechzahldifferenz zwischen dem Kern 2 und dem Mantel 3 nur geringfügig beeinflußt. Hingegen bewirkt die Aluminiumdotierung eine merkliche Erhöhung der Viskosität des Mantelglases im Temperaturbereich zwischen 1000°C und 2500°C gegenüber einem nur mit Fluor dotierten Mantelglas. Mit der Aluminiumdotierung gelingt es die Viskosität des mit Fluor dotierten Mantelglases zu erhöhen. Beim Ziehen des Lichtwellenleiters 1 werden daher die Ziehkräfte überwiegend vom Mantel 3 aufgenommen. Dadurch wird beim Abkühlen der Kem 2 unter Druckspannungen gesetzt. Im Gegensatz zu Zugspannungen bewirken die Druckspannungen keine Verschlechterung der optischen Eigenschaften des Kemglases. Zur Erzeugung einer Druckspannungsschicht im Bereich der Oberfläche ist die Hüllschicht 4 vorgesehen. Das titandotierte Quarzglas weist einen kleineren thermischen Ausdehnungskoeffizienten auf als das Mantelglas, so daß die Hüllschicht 4 beim Abkühlen durch den stärker schrumpfenden Mantel 3 unter Druckspannungen gesetzt wird.

Mit dem in Figur 1 gezeigten Singlemode-Lichtwellenleiter sind Dämpfungswerte von weniger als 0,18 dB/km bei Lichtwellenlängen um 1,5 um erreichbar.

In erfindungsgemäßen optischen Bauteilen ist statt Aluminium jedoch Stickstoff als viskositätserhöhendes Versteifungsmittel enthalten.

In einer Ausführungsform einer Single-mode-Faser (in der Figur nicht dargestellt) entsprechen die geometrischen Abmessungen von Kem, Mantel und Hüllschicht denjenigen, wie sie oben anhand der Figur 1 erläutert worden sind. Bei dieser Ausführungsform besteht das Kemglas der Singlemode-Faser aus Quarzglas, das mit 2000 ppm Chlor dotiert ist. Ansonsten weist das Kernglas keine weiteren Dotierungselemente auf. Der das Kernglas umhüllende Mantel besteht aus fluordotiertem Quarzglas. Die Fluordotierung bewirkt eine Brechzahlabsenkung relativ zum Kemglas von 5x10⁻³. Außerdem ist das Mantelglas mit ca. 200 ppm Chlor dotiert.

Die relativ hohe Chlordotierung des Kernglases bewirkt eine Absenkung der Viskosität des Kemglases gegenüber reinem Quarzglas und auch gegenüber dem Mantelglas. Die Absenkung der Viskosität ist so groß, daß beim Faserziehen die Ziehkräfte in erster Linie vom härteren Mantelglas aufgenommen werden, wodurch das Kemglas beim Abkühlen unter Druckspannungen gesetzt wird.

Bei dem in **Figur 2** dargestellten Beispiel, das der Erläuterung dient und nicht unter den Schutzumfang fällt, in Form einer Vorform 5 für eine Singlemode-Faser wird das Kemglas 6 von einer inneren Mantelschicht 7 und von einer äußeren Mantelschicht 8 umhüllt. Das Kernglas 6 besteht aus undotiertem Quarzglas. Die innere Mantelschicht 7 besteht aus Quarzglas, das zur Brechzahlabsenkung mit Fluor dotiert ist. Die äußere Mantelschicht 8 besteht aus Quarzglas und enthält als ein die Viskosität erhöhendes Versteifungsmittel Aluminiumoxid. Die äußere Mantelschicht 8 kann auch aus undotiertem Quarzglas bestehen. Die innere Mantelschicht 7 weist bei der Faserziehtemperatur um 2000 °C eine relativ niedrige, das Kemglas 6 und insbesondere die äußere Mantelschicht 8 hingegen eine relativ hohe Viskosität auf. Beim Ziehen von Lichtwellenleitern aus der Vorform 5 gewährleistet die hohe Viskosität der äußeren Mantelschicht 8, daß die beim Faserziehen auftretenden Zugkräfte ganz oder zum größten Teil von dieser Schicht 8 aufgenommen werden. Dazu trägt auch die Querschnittsfläche der äußeren Mantelschicht 8 bei, die in Längsachsenrichtung der Vorform 5 gesehen wesentlich größer ist als diejenige des Kernglases 6. Dadurch ist es möglich, das Kemglas 6 beim Faserzeihen im wesentlichen frei von Zugkräften zu halten. Bei den aus der Vorform 5 gezogenen Singlemode-Fasern ist der Kern daher im wesentlichen frei von Zugspannungen, die auf Zugkräfte beim Faserziehen zurückzuführen wären. In erfindungsgemäßen optischen Bauteilen ist anstelle des Aluminiums jedoch Stickstoff als viskositätserhöhendes versteifungsmittel enthalten.

## Patentansprüche

1. Optisches Bauteil für die Übertragung von Licht, mit einem zylinderförmigen Kern (2; 6) aus Quarzglas und mit einem den Kern (2; 6) axial umhüllenden Mantel (3; 7; 8) aus Quarzglas und einem die Brechzahl dieses Quarzglases absenkenden Dotierstoff in Form von Fluor und/oder Bor, **dadurch gekennzeichnet, daß** das Quarzglas des Mantels (3; 7; 8) zusätzlich ein seine Viskosität im Bereich der Faser-Ziehtemperatur erhöhendes Versteifungsmittel enthält, das Stickstoff enthält, und/oder daß das Quarzglas des Mantels (3; 7; 8) ein die Viskosität von Quarzglas im Bereich der Faser-Ziehtemperatur verringerndes, Chlor enthaltendes Relaxationsmittel in geringerer Konzentration enthält als das Quarzglas des Kerns (2; 6).

2. Optisches Bauteil nach Anspruch 1, **dadurch gekennzeichnet, daß** die Chlorkonzentration im Quarzglas des Kerns (2; 6) maximal 3000 ppm beträgt und daß die Chlorkonzentration im Quarzglas des Mantels (3; 7; 8) weniger als 50 % der Chlorkonzentration im Quarzglas des Kerns (2; 6) beträgt.

3. Optisches Bauteil nach Anspruch 1 oder 2, **dadurch gekennzeichnet, daß** der Mantel (3; 7; 8) eine innere (7) und eine äußere Schicht (8) aufweist, wobei die innere Schicht (7) mit dem die Brechzahl absenkenden Dotierstoff dotiert ist und die äußere Schicht (8) ein die Viskosität erhöhendes Versteifungsmittel enthält.

4. Optisches Bauteil nach einem oder mehreren der vorhergehenden Ansprüche, **dadurch gekennzeichnet, daß** seine Zylindermantelfläche von einem den Mantel (3; 7; 8) axial umhüllenden Hüllglas (4) gebildet ist, das im Temperaturbereich von 1000° C bis 2500° C einen kleineren thermischen Ausdehnungskoeffizienten aufweist als das Quarzglas des Mantels (3; 7; 8).

## Claims

1. An optical member for the transmission of light having a cylindrical core (2; 6) of silica glass and having a cladding (3; 7; 8) that axially surrounds the core (2; 6), which is made of silica glass and a doping material decreasing the refractive index of this silica glass in the form of flourine and/or boron, wherein the silica glass of the cladding (3; 7; 8) additionally contains a stiffening element which increases its viscosity in the range of the fiber drawing temperature that contains nitrogen and/or wherein the silica glass of the cladding (3; 7; 8) contains a chlorine containing relaxation element that decreases the viscosity of silica glass in the range of the fiber drawing temperature in a lower concentration than the silica glass of the core (2; 6).

2. An optical member claimed in claim 1, wherein the chlorine concentration in the silica glass of the core (2; 6) is 3000 ppm or less and wherein the chlorine concentration in the silica glass of the cladding (3; 7; 8) is less than 50 % of the chlorine concentration in the silica glass of the core (2; 6).

3. An optical member claimed in claim 1 or 2, wherein the cladding (3; 7; 8) has an inner (7) and an outer layer (8), while the inner layer (7) is doped with the doping material that decreases the refractive index and the outer layer (8) contains a stiffening element that increases the viscosity.

4. An optical member claimed in one or more of the aforementioned claims, wherein its lateral cylinder surface is formed by a jacket glass (4) that axially surrounds the cladding (3; 7; 8) and whose thermal expansion coefficient in the temperature range from 1000°C to 2500°C is smaller than that of the silica glass of the cladding (3; 7; 8).

## Revendications

1. Composant optique pour la transmission de lumière avec un noyau de forme cylindrique (2; 6) en verre de quartz et avec une enveloppe (3; 7; 8) en verre de quartz enrobant axialement le coeur (2; 6) et une substance de dopage diminuant l'indice de réfraction de ce verre de quartz sous forme de fluor ou de bore, **caractérisé en ce que** le verre de quartz de l'enveloppe (3; 7; 8) comprend en plus un agent rigidifiant augmentant sa viscosité dans la plage de température d'étirage des fibres et contenant de l'azote et/ou en ce que le verre de quartz de l'enveloppe (3; 7; 8;) comporte un agent relaxant contenant du chlore et réduisant la viscosité du verre de quartz dans la zone de la température d'étirage des fibres en concentration moindre que le verre de quartz du noyau (2; 6).

2. composant optique selon la revendication 1, **caractérisé en ce que** la concentration en chlore s'élève dans le verre de quartz du coeur (2; 6) à 3000 ppm maximum et que la concentration de chlore dans le verre de quartz de l'enveloppe (3; 7; 8) s'élève à moins de 50 % de la concentration en chlore dans le verre de quartz du noyau (2; 6).

3. Composant optique selon la revendication 1 ou 2, **caractérisé en ce que** l'enveloppe (3; 7; 8) présente une couche interne(7) et une couche externe (8), la couche interne (7) étant dopée d'une substance de dopage diminuant l'indice de réfraction et la couche externe (8) contenant un agent rigidifiant augmentant la viscosité.

4. composant optique selon une ou plusieurs des revendications précédentes, **caractérisé en ce que** sa surface d'enveloppe cylindrique est formée par un gaz d'enrobage (4) enrobant axialement l'enveloppe (3; 7; 8), qui présente dans la plage de température comprise entre 1000°C et 2500°C un coefficient de dilatation thermique inférieure au verre de quartz de l'enveloppe (3; 7; 8).
